# EUROPEAN PATENT SPECIFICATION

(11) **EP 4 316 610 B1**
(45) Date of publication and mention of the grant of the patent: **14.01.2026**
(21) Application number: 23177909.1
(22) Date of filing: 07.06.2023
(51) Int. Cl.: A63B 22/02, A63B 24/00, A63B 71/06

(54) **TREADMILL AND SPEED CONTROL METHOD THEREOF**
LAUFBAND UND GESCHWINDIGKEITSSTEUERUNGSVERFAHREN DAFÜR
TAPIS ROULANT ET SON PROCÉDÉ DE COMMANDE DE VITESSE

(30) Priority: 04.08.2022 TW 111129282
(43) Date of publication of application: 07.02.2024
(73) Proprietor: Pegatron Corporation, Taipei City 112 (TW)
(72) Inventor: LIN, Tzu-Hao, 112 Taipei City (TW)
(74) Representative: Becker, Eberhard

(56) References cited:
- WO-A1-2020/053711
- WO-A1-2021/132426
- CN-A- 112 807 617
- CN-B- 108 114 405
- CN-B- 111 437 575
- US-A1- 2019 240 540
- MOTIONMETRIX: "Markerless Motion Capture", TECHNOLOGY, MOTIONMETRIX AB, 25 December 2019 (2019-12-25), pages 1 - 7, XP055837831, Retrieved from the Internet <URL:https://web.archive.org/web/20191225050822/http://www.motionmetrix.se/4-technology/> [retrieved on 20210906]

## Description

### BACKGROUND

### Technology Field

The disclosure relates to a kind of sports equipment, and especially relates to a treadmill and a speed control method thereof.

### Description of Related Art

Modern people pay more and more attention to the importance of exercise, and the treadmill is a piece of sports equipment that is very common and popular among the public. A user may speed walk or run on the running belt of the treadmill to achieve exercise. However, when the user's pace cannot keep up with the treadmill or a foreign object (such as a pet, a child, a water bottle or other sports equipment, etc.) is close to the treadmill, such situation may cause the user to fall or the child or the pet to be drawn into the bottom of the treadmill, resulting in non-negligible harm. Currently, the existing accident prevention method for the treadmill is to have a safety key installed. One end of the safety key is inserted on the treadmill, and the other end of the safety key is fastened to the user. Once the user on the treadmill falls, the safety key is pulled out, causing the treadmill to stop operating to avoid further harm. However, since the safety key needs to be fastened to the user, and the safety key may be accidentally pulled out due to shaking of the user's body or hand swings, this method is not welcomed by the user. In addition, the safety key cannot detect whether a foreign object is close to a running treadmill.
WO 2021/132426 A1 relates to a smart treadmill having a motion capture ability and a motion analysis ability. US 2019/240540 A1 relates to a treadmill including a base including two rest zones and a running zone arranged between the two rest zones; a running track disposed in the running zone of the base enabling a user to exercise thereon; and a detection module having a light emitter emitting light to cover the two rest zones and the running zone, and light sensors detecting a position and a speed of the user according to a reflected light from the user. A non-patent document "Motionmetrix: "Markerless Motion Capture", pages 1-7" relates to techniques of markerless motion capture. WO 2020/053711 A1 relates to an integrated method for the dynamic control of the speed of a treadmill having a belt that turns about two rollers and a motor that sets said belt in action. CN 111 437 575 B relates to a control method and device of an intelligent treadmill having a visual sensor. CN 112 807 617 A relates to a running safety monitoring and guiding method and equipment based on a three-dimensional camera. CN 108 114 405 B relates to a treadmill adaptive system based on 3D depth camera and flexible pressure-sensitive sensor having a treadmill body.

### SUMMARY

The invention is set out in the appended set of claims. The following disclosure serves a better understanding of the present invention. In view of this, the disclosure proposes a treadmill and a speed control method thereof, which may automatically control a speed of the treadmill according to position information of a runner on the treadmill, so as to improve the use safety of the treadmill.

An embodiment of the disclosure provides a treadmill, which includes a treadmill body, an event-based vision sensor, and a processor. The treadmill body includes a running belt. The event-based vision sensor is disposed on the treadmill body and generates a sensing image. The processor is coupled to the event-based vision sensor, obtains the sensing image, and performs runner detection on the sensing image. In response to determining that a runner is detected from the sensing image, the processor inputs the sensing image to a depth estimation model, obtains position information of the runner relative to the running belt, and controls the running speed of the running belt according to the position information of the runner.

An embodiment of the disclosure provides a speed control method of a treadmill, and the method includes the following steps. A sensing image is generated through an event-based vision sensor disposed on the treadmill. Runner detection is performed on the sensing image. In response to determining that a runner is detected from the sensing image, the sensing image is input to a depth estimation model, and position information of the runner relative to a running belt is obtained. A running speed of the running belt is controlled according to the position information of the runner.

Based on the above, in the embodiment of the disclosure, the event-based vision sensor is disposed on the treadmill body to perform a shooting operation and generate the sensing image. When the runner is identified from the sensing image, the sensing image and the trained depth estimation model may be used to estimate the position information of the runner relative to the running belt, so as to determine whether to lower the running speed of the running belt according to the position information of the runner. Based on this, when the user may be about to have an accident, the treadmill may perform handling actions or issue a warning in advance, thereby improving the use safety of the treadmill.

### BRIEF DESCRIPTION OF THE DRAWINGS

FIG. 1 is a schematic diagram of a treadmill according to an embodiment of the disclosure.
FIG. 2 is a flowchart of a speed control method of a treadmill according to an embodiment of the disclosure.
FIG. 3 is a flowchart of detecting a runner according to an embodiment of the disclosure.
FIGS. 4A and 4B are schematic diagrams of identifying a runner according to an embodiment of the disclosure.
FIG. 5 is a flowchart of a speed control method of a treadmill according to an embodiment of the disclosure.
FIG. 6 is a schematic diagram of generating a depth map according to an embodiment of the disclosure.
FIG. 7 is a schematic diagram of performing motion detection on a background area according to an embodiment of the disclosure.

### DESCRIPTION OF THE EMBODIMENTS

Some embodiments of the disclosure accompanied with drawings are described in detail as follows. The reference numerals used in the following description are regarded as the same or similar elements when the same reference numerals appear in different drawings. These embodiments are only a part of the disclosure, and do not disclose all the possible implementations of the disclosure. To be more precise, the embodiments are only examples of methods and devices in the scope of the claims of the disclosure.

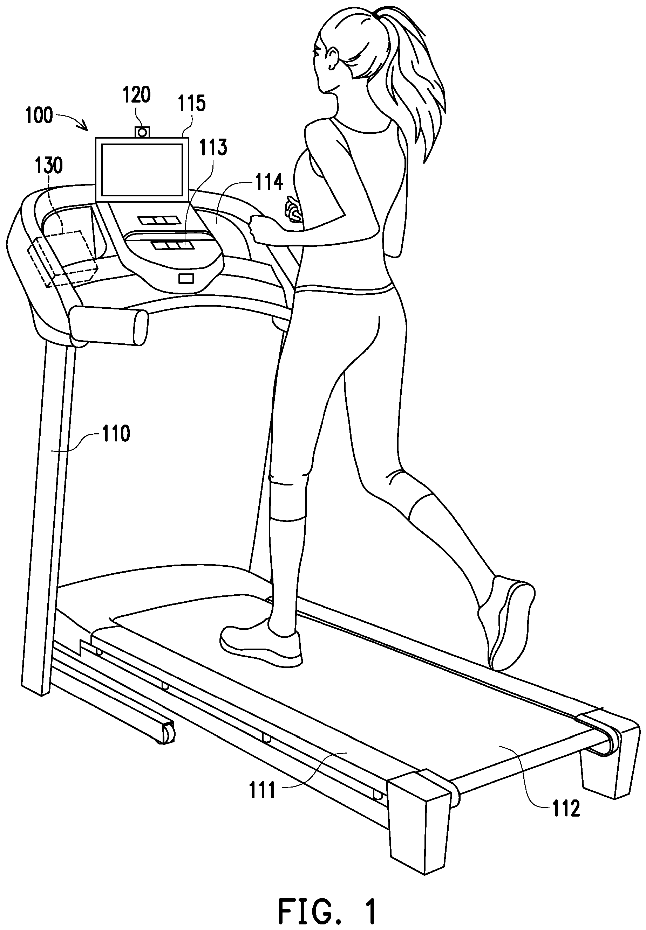

FIG. 1 is a schematic diagram of a treadmill according to an embodiment of the disclosure. Referring to FIG. 1, a treadmill 100 includes a treadmill body 110, an event-based vision sensor 120, and a processor 130. The event-based vision sensor 120 and the processor 130 are disposed on the treadmill body 110, and the processor 130 is coupled to the event-based vision sensor 120.

The treadmill body 110 may include a base 111, a running belt 112, an input device 113, a console 114, and a monitor 115. The base 111 is provided with the running belt 112. When the treadmill 100 is in operation, the running belt 112 on the base 111 is driven by the motor to run. The running belt 112 is for a runner to step on, and the feet of the runner repeatedly step along with the running belt 112. The monitor 115 and the input device 113 are disposed on the console 114. The runner may input a set speed through the input device 113 to control the running speed of the running belt 112. The input device 113 is, for example, a control panel including keys or buttons, which is not limited in the disclosure.

The event-based vision sensor 120 is, for example, a dynamic vision sensor (DVS) or a dynamic and active-pixel vision sensor (DAVIS). The shooting direction of the event-based vision sensor 120 is opposite to the running direction of the runner, so as to capture a sensing image towards the runner who is using the treadmill 100. In some embodiments, the event-based vision sensor 120 may be disposed on the console 114. The event-based vision sensor 120 may be configured to sense the change of light intensity in the shooting scene and generate a sensing image. In other words, each pixel in the sensing image generated by the event-based vision sensor 120 represents the variation of light intensity. The event-based vision sensor 120 has the characteristics of low data volume, fast response time, and low power consumption, and may protect the privacy of the user.

The processor 130 may be configured to control the actions of various components of the treadmill 100, such as a central processing unit (CPU), or other programmable general-purpose or special-purpose microprocessors, a digital signal processor (DSP), a programmable controller, an application specific integrated circuit (ASIC), a programmable logic device (PLD) or other similar elements or a combination of the aforementioned elements.

In the embodiment of the disclosure, the event-based vision sensor 120 may continuously generate multiple sensing images when the running belt 112 of the treadmill 100 is running. The processor 130 may detect whether an abnormality in the operating mode or the operating environment of the treadmill 100 occurs according to the sensing images, so as to prevent accidents from happening. The accidents include a runner falling down or a foreign object being drawn into the bottom of the treadmill 100 and the like. In this way, before an accident of using the treadmill 100 occurs, the processor 130 may control the running belt 112 to reduce the running speed, so as to prevent the occurrence of the accident or reduce the accidental injury.

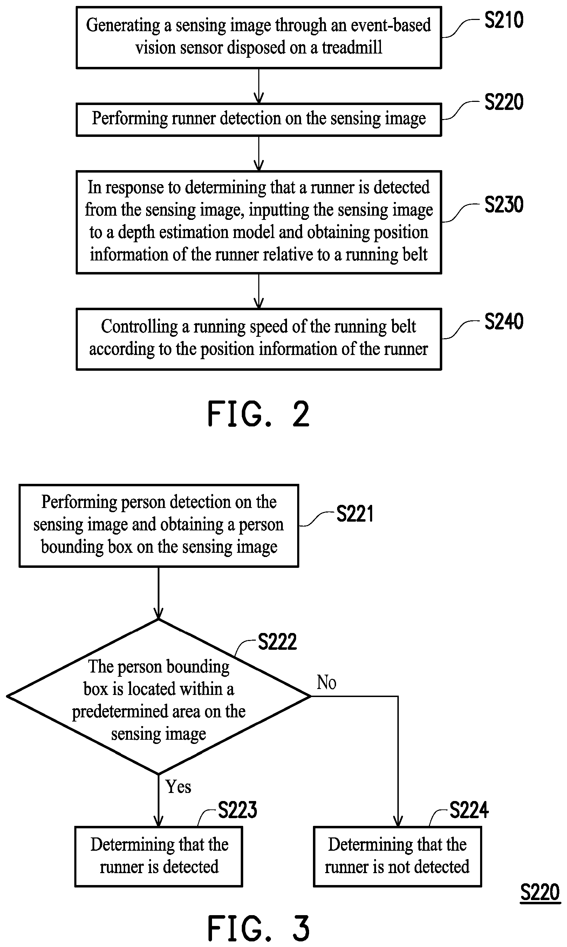

In detail, FIG. 2 is a flowchart of a speed control method of a treadmill according to an embodiment of the disclosure. Referring to FIGS. 1 and 2 at the same time, the method of the embodiment is adapted for the treadmill 100 mentioned above. The detailed steps of the speed control method of the treadmill in the embodiment are described below together with the various elements of the treadmill 100.

In step S210, a sensing image is generated through the event-based vision sensor 120 disposed on the treadmill 100. As mentioned above, the event-based vision sensor 120 may continuously perform sensing and generate multiple sensing images corresponding to different sensing time points. It can be seen that if a runner is exercising on the treadmill 100, the event-based vision sensor 120 may capture the sensing image including the runner. In addition, the embodiment of the disclosure does not limit the image resolution of the sensing image, which may be determined according to the actual application. In addition, in some embodiments, the event-based vision sensor 120 may be a dynamic vision sensor (DVS), and the sensing image is a DVS image.

In step S220, the processor 130 performs runner detection on the sensing image. That is to say, the processor 130 may determine whether a runner is exercising on the treadmill 100 by performing runner detection on the sensing image. In addition, in some embodiments, the processor 130 may further determine whether a runner is exercising on the treadmill 100 with the assistance of other sensing technologies, such as an infrared sensing technology or a weight sensing technology.

For details, please refer to FIG. 3, which is a flowchart of detecting a runner according to an embodiment of the disclosure. Step S220 shown in FIG. 2 may be implemented as steps S221 to S224. In step S221, the processor 130 performs person detection on the sensing image and obtains a person bounding box on the sensing image. In some embodiments, the processor 130 may input the sensing image to a trained deep learning model for person detection. The deep learning model is, for example, a convolution neural network (CNN) model, which may capture features from the sensing image for person detection. For example, the processor 130 may apply a deep learning model based on the YOLO algorithm to perform person detection on the sensing image, but the disclosure is not limited thereto. If the deep learning model detects a person, the deep learning model uses a rectangular person bounding box to mark the position of the person, so the processor 130 may obtain the person bounding box in the sensing image according to the output of the deep learning model. For example, the deep learning model may output a vertex coordinate, a box length, and a box width of the person bounding box.

In step S222, the processor 130 determines whether the runner is detected according to whether the person bounding box is located within a predetermined area on the sensing image. The aforementioned predetermined area is, for example, a central area of the sensing image. However, the size and position of the predetermined area may be designed according to the position where the event-based vision sensor 120 is disposed. By determining whether the person bounding box is located within the predetermined area on the sensing image, the processor 130 may identify whether the person marked by the person bounding box is the runner on the treadmill 100.

If the person bounding box is located within the predetermined area on the sensing image (yes is determined in step S222), in step S223, the processor 130 determines that the runner is detected. On the contrary, if the person bounding box is not located within the predetermined area on the sensing image (no is determined in step S222), in step S224, the processor 130 determines that the runner is not detected.

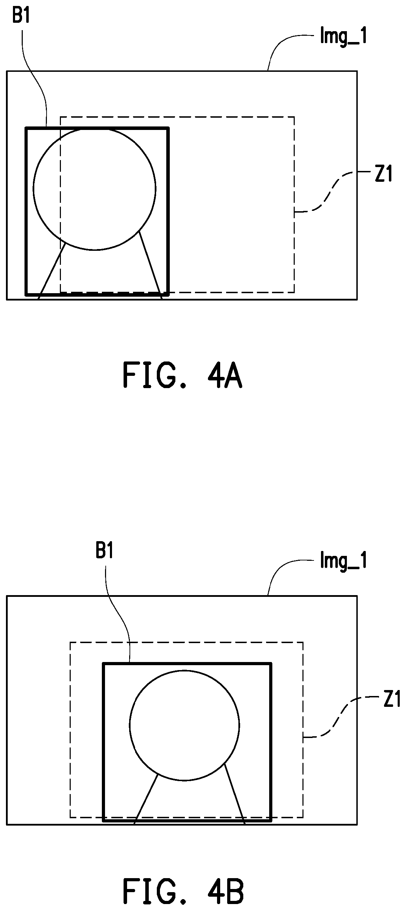

For example, FIGS. 4A and 4B are schematic diagrams of identifying a runner according to an embodiment of the disclosure. In the embodiment, it is assumed that the predetermined area is the central area of the sensing image. Referring to FIG. 4A, the processor 130 determines that a person bounding box B1 is not located within a central area Z1 of a sensing image Img_1, so the processor 130 determines that the runner is not detected. On the contrary, referring to FIG. 4B, the processor 130 determines that the person bounding box B1 is located within the central area Z1 of the sensing image Img_1, so the processor 130 determines that the runner is detected.

Referring to FIG. 2 again, in step S230, in response to determining that the runner is detected from the sensing image, the processor 130 inputs the sensing image to a depth estimation model and obtains position information of the runner relative to the running belt 112. Specifically, when determining that the runner is exercising on the treadmill 100, the processor 130 inputs the sensing image to the depth estimation model to obtain depth information of the runner, thereby obtaining the position information of the runner on the running belt 112. The depth estimation model may be a deep learning model applying a monocular depth estimation (Monodepth) algorithm. In some embodiments, the depth estimation model may use the DVS image as a training data set for model training. In addition, the depth information of the runner generated by the depth estimation model is the depth information between the runner and the event-based vision sensor 120. In some embodiments, according to the disposing position of the event-based vision sensor 120, the processor 130 may obtain the position information of the runner on the running belt 112 according to the depth information generated by the depth estimation model. For example, according to the relative positional relationship between the event-based vision sensor 120 and a component on the console 114, the position information of the runner may be the distance between the runner and the component on the console 114.

In step S240, the processor 130 controls the running speed of the running belt 112 according to the position information of the runner. Specifically, when the processor 130 finds that the runner is too far away from the console 114 or is located at the end area of the running belt 112 according to the position information of the runner, such finding means that the runner cannot keep up with the running speed of the running belt 112. Thus, the processor 130 may automatically lower the running speed of the running belt 112. In some embodiments, the processor 130 may gradually lower the running speed of the running belt 112. In addition, in some embodiments, the processor 130 may further provide a warning according to the position information of the runner, and the above-mentioned warning is, for example, a light warning or a sound effect warning and the like. In this way, the processor 130 may monitor the exercising state of the runner in real time and accordingly control the running speed of the running belt 112 or provide the warning to prevent the runner from falling due to being unable to keep up with the running speed of the running belt 112.

It is worth mentioning that, in some embodiments, the sensing image generated by the event-based vision sensor 120 may further be configured to detect whether a foreign object is too close to the treadmill 100, so as to avoid the accident caused by the foreign object affecting the runner's exercise.

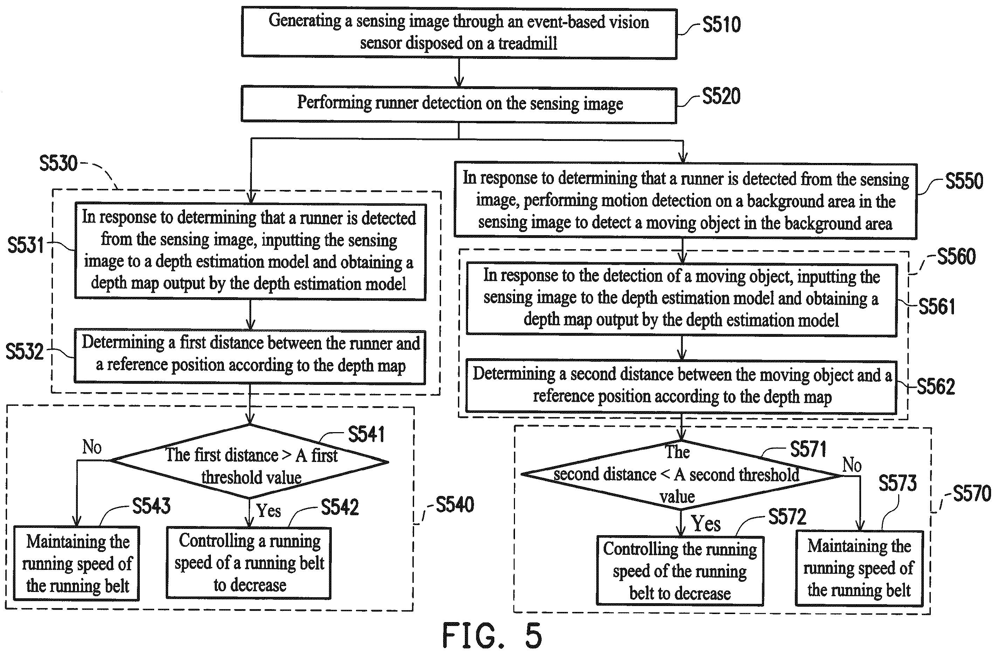

In detail, FIG. 5 is a flowchart of a speed control method of a treadmill according to an embodiment of the disclosure. Referring to FIGS. 1 and 5 at the same time, the method of the embodiment is adapted for the treadmill 100 mentioned above. The detailed steps of the speed control method of the treadmill in the embodiment are described below together with the various elements of the treadmill 100.

In step S510, the processor 130 generates a sensing image through the event-based vision sensor 120 disposed on the treadmill 100. In step S520, the processor 130 performs runner detection on the sensing image. The detailed implementation manners of the above steps S510 to S520 have been clearly described in steps S210 to S220 of the embodiment in FIG. 2, and are not repeated here.

In step S530, in response to determining that the runner is detected from the sensing image, the processor 130 inputs the sensing image to the depth estimation model and obtains position information of the runner relative to the running belt 112. Here, step S530 may be implemented as steps S531 to S532.

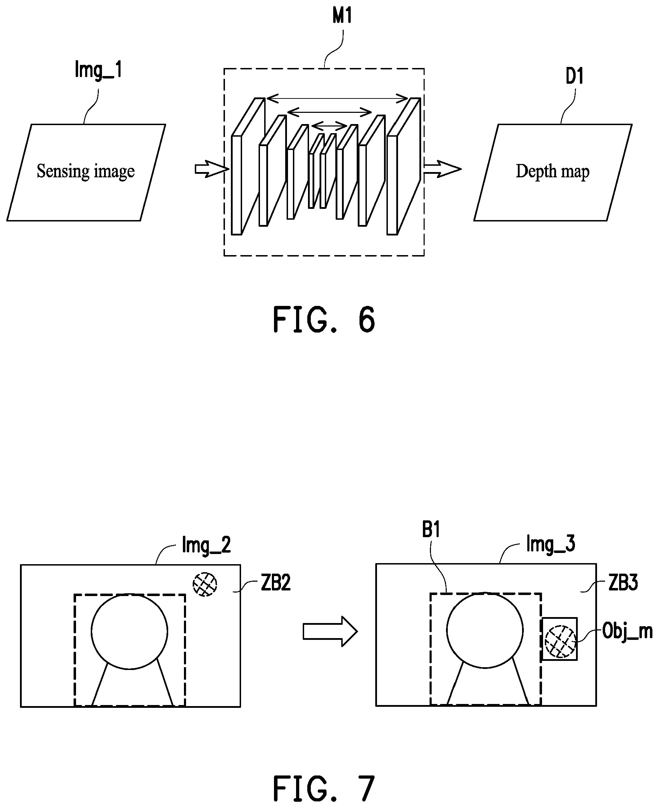

In step S531, in response to determining that the runner is detected from the sensing image, the processor 130 inputs the sensing image to the depth estimation model and obtains a depth map output by the depth estimation model. As shown in FIG. 6, which is a schematic diagram of generating a depth map according to an embodiment of the disclosure. The processor 130 may input the sensing image Img_1 to a depth estimation model M1, and obtain a depth map D1 output by the depth estimation model M1. The depth map D1 may include a depth value corresponding to each pixel in the sensing image Img_1, that is, multiple depth values in the depth map D1 respectively correspond to multiple pixels in the sensing image Img_1. In some embodiments, the depth values in the depth map D1 may range from 0 to 255.

It should be noted that when the sensing image is implemented as a DVS image, the depth estimation model may complete model training according to multiple DVS images as the training data set and the corresponding ground truth. The above-mentioned ground truth may be a depth map obtained by performing depth estimation according to RGB images. In this way, when the processor 130 applies the depth estimation model, the processor 130 may input the DVS image generated by the event-based vision sensor 120 to the depth estimation model and obtain a corresponding depth map.

In step S532, the processor 130 determines a first distance between the runner and a reference position according to the depth map. In detail, in some embodiments, the processor 130 may obtain the depth information corresponding to the runner from the depth map according to the person bounding box. For example, the processor 130 may extract a depth value corresponding to the runner from the depth map according to the center position of the person bounding box. Alternatively, the processor 130 may annotate multiple depth values from the depth map according to the coordinate position of the person bounding box, perform statistical calculation on the depth values, and obtain a depth value corresponding to the runner.

Then, the processor 130 may calculate the first distance between the runner and the reference position according to the depth information of the runner. Specifically, in some embodiments, the position information of the runner may be the first distance between the runner and the reference position, and the above-mentioned reference position is, for example, the disposing position of the event-based vision sensor 120 or the disposing positions of other components on the console 114. For example, it is assumed that the console 114 of the treadmill 100 is provided with a monitor 115. After obtaining the depth information of the runner from the depth map, based on the relative positional relationship between the monitor 115 and the event-based vision sensor 120, the processor 130 may calculate the first distance between the runner and the monitor 115 according to the depth information of the runner. Therefore, the processor 130 may instantly determine whether the situation where the runner cannot keep up with the running speed of the running belt 112 occurs according to the first distance.

In step S540, the processor 130 controls the running speed of the running belt according to the position information of the runner. Here, step S540 may be implemented as steps S541 to S543.

In step S541, the processor 130 determines whether the first distance is greater than a first threshold value. The first threshold value may be set according to the actual application, which is not limited in the disclosure. If the first distance is greater than the first threshold value (yes is determined in step S541), such condition means that the runner may not be able to keep up with the running speed of the running belt 112. In step S542, the processor 130 controls the running speed of the running belt 112 to decrease. On the contrary, if the first distance is not greater than the first threshold value (no is determined in step S541), in step S543, the processor 130 maintains the running speed of the running belt 112, that is, the processor 1 30 does not adjust the running speed of the running belt 112.

On the other hand, in step S550, in response to determining that the runner is detected from the sensing image, the processor 130 performs motion detection on the background area in the sensing image to detect a moving object in the background area. In some embodiments, the processor 130 may use the area outside the person bounding box as the background area in the sensing image. Alternatively, the background area may also be a pre-defined area in the sensing image.

In some embodiments, the processor 130 may compare the background area of the current sensing image with the background area of the previous sensing image to determine whether the moving object appears in the background area. For example, the processor 130 may detect the moving object through image subtraction or optical flow, but the disclosure is not limited thereto. For example, FIG. 7 is a schematic diagram of performing motion detection on a background area according to an embodiment of the disclosure. Referring to FIG. 7, based on the continuous sensing performed by the event-based vision sensor 120, the processor 130 may obtain a previous sensing image Img_2 and a current sensing image Img_3. By comparing a background area ZB2 of the previous sensing image Img_2 with a background area ZB3 of the current sensing image Img_3, the processor 130 may detect a moving object Obj_m. The background area ZB3 of the current sensing image Img_3 may be an area outside the person bounding box B1.

In step S560, in response to the detection of the moving object, the processor 130 inputs the sensing image to the depth estimation model and obtains position information of the moving object. Here, step S560 may be implemented as steps S561 to S562.

In step S561, in response to the detection of the moving object, the processor 130 inputs the sensing image to the depth estimation model and obtains a depth map output by the depth estimation model. In step S562, the processor 130 determines a second distance between the moving object and a reference position according to the depth map. It should be noted that after the motion detection, the processor 130 may also obtain a bounding box configured to mark the moving object, and the operation method of obtaining the position information of the moving object is similar to the operation method of obtaining the position information of the runner. That is, the detailed implementation manners of steps S561 to S562 are similar to the detailed implementation manners of steps S531 to S532, and are not repeated here.

In step S570, the processor 130 controls the running speed of the running belt according to the position information of the moving object. Here, step S570 may be implemented as steps S571 to S573. In step S571, the processor 130 determines whether the second distance is less than a second threshold value. If the second distance is less than the second threshold value (yes is determined in step S571), such condition means that the moving object is very close to the treadmill 100. In step S572, the processor 130 controls the running speed of the running belt 112 to decrease. In some embodiments, if the second distance is less than the second threshold value, the processor 130 may also provide a sound and light warning to the runner. On the contrary, if the second distance is not less than the second threshold value (no is determined in step S571), in step S573, the processor 130 maintains the running speed of the running belt 112. In this way, the runner may be notified in advance that a foreign object is approaching the treadmill 100 in operation, so as to prevent the foreign object from being drawn into the bottom of the base 111 by the running belt 112 or to prevent the foreign object from disturbing the runner.

To sum up, in the embodiment of the disclosure, the event-based vision sensor is disposed on the treadmill body to perform sensing. When a runner is exercising on the treadmill, the position information of the runner may be estimated according to the sensing image generated by the event-based vision sensor and the depth estimation model, so as to have the speed of the treadmill controlled according to the position information of the runner. In this way, the runner may be prevented from falling on the treadmill in advance. In addition, when the runner is exercising on the treadmill, the moving object may be detected according to the sensing image generated by the event-based vision sensor. By estimating the position information of the moving object according to the sensing image and the depth estimation model, the speed of the treadmill may be controlled according to the position information of the moving object. In this way, the runner may be prevented from being disturbed by the foreign object or the foreign object may be prevented from being drawn into the bottom of the treadmill in advance. In light of the above, the safety of the treadmill may be significantly improved.

## Claims

1. A treadmill (100), comprising:
a treadmill body (110), comprising a running belt (112);
an event-based vision sensor (120), disposed on the treadmill body (110) and configured to sense change of light intensity in a shooting scene to generate a sensing image (Img_1), wherein each pixel in the sensing image generated by the event-based vision sensor (120) represents variation of light intensity, and the event-based vision sensor (120) comprises a dynamic vision sensor;
a processor (130), coupled to the event-based vision sensor (120), obtaining the sensing image (Img_1), and performing runner detection on the sensing image (Img_1), in response to determining that a runner is detected from the sensing image (Img_1), the processor (130) inputting the sensing image (Img_1) to a depth estimation model (M1) comprising a monocular depth estimation model trained using a depth learning model, obtaining a depth map (D1) outputted by the depth estimation model (M1) to obtain position information of the runner relative to the running belt (112), and controlling a running speed of the running belt (112) according to the position information of the runner.

2. The treadmill (100) according to claim 1, wherein the processor (130) performs person detection on the sensing image (Img_1), obtains a person bounding box (B1) on the sensing image (Img_1), and determines whether the runner is detected according to whether the person bounding box (B1) is located within a predetermined area on the sensing image (Img_1).

3. The treadmill (100) according to claim 2, wherein if the person bounding box (B1) is not located within the predetermined area on the sensing image (Img_1), the processor (130) determines that the runner is not detected; and if the person bounding box (B1) is located within the predetermined area on the sensing image (Img_1), the processor (130) determines that the runner is detected.

4. The treadmill (100) according to claim 1, wherein in response to determining that a runner is detected from the sensing image (Img_1), the processor (130) determines a first distance between the runner and a reference position according to the depth map (D1).

5. The treadmill (100) according to claim 4, wherein if the first distance is greater than a first threshold value, the processor (130) controls the running speed of the running belt (112) to decrease; and if the first distance is not greater than the first threshold value, the processor (130) maintains the running speed of the running belt (112).

6. The treadmill (100) according to claim 1, wherein in response to determining that the runner is detected from the sensing image (Img_2, Img_3), the processor (130) performs motion detection on a background area (ZB2, ZB3) in the sensing image (Img_2, Img_3) to detect a moving object (Obj_m) in the background area (ZB2, ZB3).

7. The treadmill (100) according to claim 6, wherein in response to the detection of the moving object (Obj_m), the processor (130) inputs the sensing image (Img_2, Img_3) to the depth estimation model and obtains position information of the moving object (Obj_m), so as to control the running speed of the running belt (112) according to the position information of the moving object (Obj_m).

8. The treadmill (100) according to claim 7, wherein in response to the detection of the moving object (Obj_m), the processor (130) inputs the sensing image (Img_2, Img_3) to the depth estimation model, obtains the depth map output by the depth estimation model, and determines a second distance between the moving object and a reference position according to the depth map.

9. The treadmill (100) according to claim 8, wherein if the second distance is less than a second threshold value, the processor (130) controls the running speed of the running belt (112) to decrease; and if the second distance is not less than the second threshold value, the processor (130) maintains the running speed of the running belt (112).

10. A speed control method of a treadmill (100) according to claim 1, the speed control method comprising:
generating a sensing image (Img_1) through the event-based vision sensor (120) disposed on the treadmill (100), wherein the event-based vision sensor (120) is configured to sense change of light intensity in a shooting scene to generate the sensing image (Img_1), and each pixel in the sensing image generated by the event-based vision sensor (120) represents variation of light intensity, and the event-based vision sensor (120) comprises a dynamic vision sensor;
performing runner detection on the sensing image (Img_1);
in response to determining that a runner is detected from the sensing image (Img_1), inputting the sensing image (Img_1) to a depth estimation model (M1) comprising a monocular depth estimation model trained using a depth learning model, obtaining a depth map (D1) outputted by the depth estimation model (M1) to obtain position information of the runner relative to the running belt (112); and
controlling a running speed of a running belt (112) of the treadmill body (110) according to the position information of the runner.

## Patentansprüche

1. Laufband (100), umfassend:
einen Laufbandkörper (110), umfassend einen Laufgurt (112);
einen ereignisbasierten Visionssensor (120), der auf dem Laufbandkörper (110) angeordnet und so konfiguriert ist, dass er Änderungen der Lichtintensität in einer Aufnahmeszene erfasst, um ein Erfassungsbild (Img_1) zu erzeugen, wobei jedes Pixel in dem von dem ereignisbasierten Visionssensor (120) erzeugten Erfassungsbild eine Änderung der Lichtintensität darstellt und der ereignisbasierte Visionssensor (120) einen dynamischen Bildsensor umfasst;
einen mit dem ereignisbasierten Visionssensor (120) gekoppelten Prozessor (130), der das Erfassungsbild (Img_1) erhält und eine Läufererkennung in dem Erfassungsbild (Img_1) als Reaktion auf die Feststellung, dass in dem Erfassungsbild (Img_1) ein Läufer erkannt wird, durchführt, wobei der Prozessor (130) das Erfassungsbild (Img_1) in ein Tiefenschätzungsmodell (M1) eingibt, umfassend ein monokulares Tiefenschätzungsmodell, das unter Verwendung eines Tiefenlernmodells trainiert wird, eine von dem Tiefenschätzungsmodell (M1) ausgegebene Tiefenkarte (D1) erhält, um Positionsinformationen des Läufers relativ zu dem Laufgurt (112) zu erhalten, und eine Laufgeschwindigkeit des Laufgurts (112) entsprechend den Positionsinformationen des Läufers steuert.

2. Laufband (100) nach Anspruch 1, wobei der Prozessor (130) eine Personenerkennung in dem Erfassungsbild (Img_1) durchführt, einen Personenbegrenzungsrahmen (B1) in dem Erfassungsbild (Img_1) erhält und feststellt, ob der Läufer erkannt wird, je nachdem, ob sich der Personenbegrenzungsrahmen (B1) innerhalb eines vorbestimmten Bereichs in dem Erfassungsbild (Img_1) befindet.

3. Laufband (100) nach Anspruch 2, wobei der Prozessor (130), wenn sich der Personenbegrenzungsrahmen (B1) nicht innerhalb des vorbestimmten Bereichs in dem Erfassungsbild (Img_1) befindet, feststellt, dass der Läufer nicht erkannt wird; und wenn sich der Personenbegrenzungsrahmen (B1) innerhalb des vorbestimmten Bereichs in dem Erfassungsbild (Img_1) befindet, der Prozessor (130) feststellt, dass der Läufer erkannt wird.

4. Laufband (100) nach Anspruch 1, wobei der Prozessor (130) als Reaktion auf die Feststellung, dass ein Läufer in dem Erfassungsbild (Img_1) erkannt wird, einen ersten Abstand zwischen dem Läufer und einer Referenzposition gemäß der Tiefenkarte (D1) feststellt.

5. Laufband (100) nach Anspruch 4, wobei der Prozessor (130), wenn der erste Abstand größer als ein erster Schwellenwert ist, die Laufgeschwindigkeit des Laufgurts (112) so steuert, dass sie abnimmt; und wenn der erste Abstand nicht größer als der erste Schwellenwert ist, der Prozessor (130) die Laufgeschwindigkeit des Laufgurts (112) beibehält.

6. Laufband (100) nach Anspruch 1, wobei der Prozessor (130) als Reaktion auf die Feststellung, dass der Läufer in dem Erfassungsbild (Img_2, Img_3) erkannt wird, eine Bewegungserkennung in einem Hintergrundbereich (ZB2, ZB3) in dem Erfassungsbild (Img_2, Img_3) durchführt, um ein sich bewegendes Objekt (Obj_m) in dem Hintergrundbereich (ZB2, ZB3) zu erkennen.

7. Laufband (100) nach Anspruch 6, wobei der Prozessor (130) als Reaktion auf die Erkennung des sich bewegenden Objekts (Obj_m) das Erfassungsbild (Img_2, Img_3) in das Tiefenschätzungsmodell eingibt und Positionsinformationen des sich bewegenden Objekts (Obj_m) erhält, um die Laufgeschwindigkeit des Laufgurts (112) entsprechend den Positionsinformationen des sich bewegenden Objekts (Obj_m) zu steuern.

8. Laufband (100) nach Anspruch 7, wobei der Prozessor (130) als Reaktion auf die Erkennung des sich bewegenden Objekts (Obj_m) das Erfassungsbild (Img_2, Img_3) in das Tiefenschätzungsmodell eingibt, die von dem Tiefenschätzungsmodell ausgegebene Tiefenkarte erhält und anhand der Tiefenkarte einen zweiten Abstand zwischen dem sich bewegenden Objekt und einer Referenzposition feststellt.

9. Laufband (100) nach Anspruch 8, wobei, wenn der zweite Abstand kleiner als ein zweiter Schwellenwert ist, der Prozessor (130) die Laufgeschwindigkeit des Laufgurts (112) so steuert, dass sie abnimmt; und wenn der zweite Abstand nicht kleiner als der zweite Schwellenwert ist, der Prozessor (130) die Laufgeschwindigkeit des Laufgurts (112) beibehält.

10. Verfahren zur Geschwindigkeitssteuerung eines Laufbands (100) nach Anspruch 1, wobei das Verfahren zur Geschwindigkeitssteuerung umfasst:
Erzeugen eines Erfassungsbildes (Img_1) durch den ereignisbasierten Visionssensor (120), der auf dem Laufband (100) angeordnet ist, wobei der ereignisbasierte Visionssensor (120) so konfiguriert ist, dass er eine Änderung der Lichtintensität in einer Aufnahmeszene erfasst, um das Erfassungsbild (Img_1) zu erzeugen, wobei jedes Pixel in dem von dem ereignisbasierten Visionssensor (120) erzeugten Erfassungsbild eine Änderung der Lichtintensität darstellt und der ereignisbasierte Visionssensor (120) einen dynamischen Bildsensor umfasst;
Durchführen einer Läufererkennung in dem Erfassungsbild (Img_1);
als Reaktion auf die Feststellung, dass ein Läufer in dem Erfassungsbild (Img_1) erkannt wird, Eingeben des Erfassungsbildes (Img_1) in ein Tiefenschätzungsmodell (M1), umfassend ein monokulares Tiefenschätzungsmodell, das unter Verwendung eines Tiefenlernmodells trainiert wird, Erhalten einer von dem Tiefenschätzungsmodell (M1) ausgegebenen Tiefenkarte (D1), um Positionsinformationen des Läufers relativ zu dem Laufgurt (112) zu erhalten; und Steuern einer Laufgeschwindigkeit eines Laufgurts (112) des Laufbandkörpers (110) entsprechend den Positionsinformationen des Läufers.

## Revendications

1. Tapis roulant (100), comprenant:
un corps de tapis roulant (110), comprenant une bande de course (112);
un capteur de vision basé sur les événements (120), disposé sur le corps du tapis roulant (110) et configuré pour détecter les changements d'intensité lumineuse dans une scène filmée afin de générer une image de détection (Img_1), dans lequel chaque pixel de l'image de détection générée par le capteur de vision basé sur les événements (120) représente une variation d'intensité lumineuse, et le capteur de vision basé sur les événements (120) comprend un capteur de vision dynamique;
un processeur (130), couplé au capteur de vision basé sur les événements (120), obtenant l'image de détection (Img_1) et effectuant une détection du coureur sur l'image de détection (Img_1), en réponse à la détermination qu'un coureur est détecté à partir de l'image de détection (Img_1), le processeur (130) entrant l'image de détection (Img_1) à un modèle d'estimation de profondeur (M1) comprenant un modèle d'estimation de profondeur monoculaire entraîné à l'aide d'un modèle d'apprentissage de profondeur, obtenant une carte de profondeur (D1) émise par le modèle d'estimation de profondeur (M1) afin d'obtenir des informations de position du coureur par rapport au tapis roulant (112), et contrôlant la vitesse de course du tapis roulant (112) en fonction des informations de position du coureur.

2. Le tapis roulant (100) selon la revendication 1, dans lequel le processeur (130) effectue une détection de personne sur l'image de détection (Img_1), obtient un cadre de délimitation de personne (B1) sur l'image de détection (Img_1) et détermine si le coureur est détecté selon que le cadre de délimitation de personne (B1) est situé ou non dans une zone prédéterminée sur l'image de détection (Img_1).

3. Le tapis roulant (100) selon la revendication 2, dans lequel si le cadre de sélection de personne (B1) n'est pas situé dans la zone prédéterminée sur l'image de détection (Img_1), le processeur (130) détermine que le coureur n'est pas détecté; et si le cadre de sélection de personne (B1) est situé dans la zone prédéterminée sur l'image de détection (Img_1), le processeur (130) détermine que le coureur est détecté.

4. Tapis roulant (100) selon la revendication 1, dans lequel, en réponse à la détermination qu'un coureur est détecté à partir de l'image de détection (Img_1), le processeur (130) détermine une première distance entre le coureur et une position de référence selon la carte de profondeur (D1).

5. Tapis roulant (100) selon la revendication 4, dans lequel si la première distance est supérieure à une première valeur seuil, le processeur (130) commande la vitesse de course de la bande de course (112) pour la diminuer; et si la première distance n'est pas supérieure à la première valeur seuil, le processeur (130) maintient la vitesse de course de la bande de course (112).

6. Tapis roulant (100) selon la revendication 1, dans lequel, en réponse à la détermination que le coureur est détecté à partir de l'image de détection (Img_2, Img_3), le processeur (130) effectue une détection de mouvement sur une zone d'arrière-plan (ZB2, ZB3) dans l'image de détection (Img_2, Img_3) afin de détecter un objet en mouvement (Obj_m) dans la zone d'arrière-plan (ZB2, ZB3).

7. Tapis roulant (100) selon la revendication 6, dans lequel, en réponse à la détection de l'objet en mouvement (Obj_m), le processeur (130) entre l'image de détection (Img_2, Img_3) au modèle d'estimation de profondeur et obtient des informations de position de l'objet en mouvement (Obj_m), afin de contrôler la vitesse de course de la bande de course (112) en fonction des informations de position de l'objet en mouvement (Obj_m).

8. Tapis roulant (100) selon la revendication 7, dans lequel, en réponse à la détection de l'objet en mouvement (Obj_m), le processeur (130) entre l'image de détection (Img_2, Img_3) dans le modèle d'estimation de profondeur, obtient la carte de profondeur produite par le modèle d'estimation de profondeur et détermine une deuxième distance entre l'objet en mouvement et une position de référence en fonction de la carte de profondeur.

9. Tapis roulant (100) selon la revendication 8, dans lequel si la deuxième distance est inférieure à une deuxième valeur seuil, le processeur (130) commande la vitesse de fonctionnement de la bande de course (112) pour la diminuer ; et si la deuxième distance n'est pas inférieure à la deuxième valeur seuil, le processeur (130) maintient la vitesse de fonctionnement de la bande de course (112).

10. Procédé de contrôle de la vitesse d'un tapis roulant (100) selon la revendication 1, le procédé de contrôle de la vitesse comprenant:
générer une image de détection (Img_1) à l'aide du capteur de vision basé sur les événements (120) disposé sur le tapis roulant (100), dans lequel le capteur de vision basé sur les événements (120) est configuré pour détecter le changement d'intensité lumineuse dans une scène de prise de vue afin de générer l'image de détection (Img_1), et chaque pixel de l'image de détection générée par le capteur de vision basé sur les événements (120) représente une variation de l'intensité lumineuse, et le capteur de vision basé sur les événements (120) comprend un capteur de vision dynamique;
effectuer une détection du coureur sur l'image de détection (Img_1);
en réponse à la détermination qu'un coureur est détecté à partir de l'image de détection (Img_1), entrer l'image de détection (Img_1) dans un modèle d'estimation de profondeur (M1) comprenant un modèle d'estimation de profondeur monoculaire entraîné à l'aide d'un modèle d'apprentissage de profondeur, obtenir une carte de profondeur (D1) produite par le modèle d'estimation de profondeur (M1) afin d'obtenir des informations de position du coureur par rapport à la bande de course (112); et
contrôler la vitesse de course d'un tapis roulant (112) du corps du tapis roulant (110) en fonction des informations de position du coureur.
